# EUROPEAN PATENT SPECIFICATION

(11) **EP 0 522 645 B1**
(45) Date of publication and mention of the grant of the patent: **22.03.2000**
(21) Application number: 92202027.6
(22) Date of filing: 03.07.1992
(51) Int. Cl.: G06F 17/21, G06F 17/30

(54) **Multi-media handling system**
Medien Handhabungssystem
Système d'exploitation pour supports multiples

(30) Priority: 11.07.1991 EP 91201804
(43) Date of publication of application: 13.01.1993
(73) Proprietor: Koninklijke Philips Electronics N.V., 5621 BA Eindhoven (NL)
(72) Inventor: Van Hemert, Jan Petrus, NL-5656 AA Eindhoven (NL)
(74) Representative: Groenendaal, Antonius Wilhelmus Maria

(56) References cited:
- EP-A- 0 176 910
- IEEE COMPUTER GRAPHICS AND APPLICATIONS vol. 11, no. 3, May 1991, NEW YORK US pages 20 - 27 R. PHILLIPS : 'An Interpersonal Multimedia Visualization System'
- AUDIO ENGINEERING SOCIETY PREPRINT OF THE 76TH CONVENTION 8 October 1984, pages 1 - 13 A. MARR : 'Computer Aided Film Sound Editing'
- ELECTRONIC DESIGN vol. 30, no. 8, April 1982, US pages 49 - 54 W. HORAK ET AL : 'Layering approach manages mixed documents'

## Description

### FIELD OF THE INVENTION

The invention relates to a text processing system for processing a document having a textual content and a multimedia content, the system comprising pagewise text display means for in a textual mode displaying textual characters, supported by text processing means and text storage means and having a user interface featuring a set of text manipulating actions which can be activated through mechanical user actuation of an appropriate input means and which then operate on the displayed textual characters, and for in a multimedia mode displaying the multimedia content, supported by multimedia processing means and multimedia storage means and having a user interface featuring multimedia manipulating actions which can be activated through mechanical user actuation of an appropriate input means and which then operate on the multimedia content. Various professional and personal computer ranges have text processing systems. An exemplary reference is the "Common User Access Advanced Interface Design Guide" for the IBM Operating System/2, by IBM, June 1989, Document SY0328-300-R00-1089, pages 33-42. Text is represented as characters according to one or more formats, free-formatable, connected or non-connected. Manipulating actions have been designed in a wide variety as will be described hereinafter. In this way the formatting of the text can be effected in many ways on the level of character, word, line, block, window, paragraph, page or other, while various actions such as insert, delete, cut, clip, paste and others are useful. In the effecting of those actions, the multilevel structure of representation of the text has been found useful. The most commonly used input devices based on such mechanical user actuation are hard keyboard and mouse. However, various other devices could serve, such as tracker ball, touch screen, or writing stylus.

The reference "An Interpersonal Multimedia Visualization System", R. Phillips, IEEE Computer Graphics and Applications, vol. 11, no. 3, May 1991, New York, US, pages 20-27, describes a system in which a document may contain in addition to ordinary text a number of other types of components. These other types of content include still images, graphics, audio and video. The known system displays such a component in an integral way, i.e. the component is treated as a single entity. The system may displayed the component in the document as a direct reproduction. For instance a still image or graphics is displayed at the appropriate place as a picture directly showing the component's content. Alternatively, the system may display an icon that indicates the presence of this other component without directly reproducing its contents. In this case, activation of the icon starts the reproduction of the corresponding component, e.g. clicking a voice annotation icon plays back the recorded contents. The other types of component in the known system are viewed as a special object related to the object representing the text. Such a component is subject to the same cut, copy and paste paradigm as text, making it possible to handle it as word. A component as a whole can be cut, copied or pasted. Editing the contents of a component requires a dedicated editing function suitable for the specific type of component.

### SUMMARY OF THE INVENTION

Amongst other things, it is an object of the invention to support representation of other communication media and their processing by means of an interface that to an appreciable extent is uniform among said various media. According to one of its aspects, the invention realizes this object in a system which is characterised in that said display means in the multimedia mode is arranged for displaying the multimedia content as a series of pseudo characters in a line-wise fashion, the series of pseudo characters representing a temporal organisation of respective pieces of stored multimedia content, and that the multimedia manipulating actions include a first multimedia subset corresponding to a first textual subset of the set of text manipulating actions for operating on the displayed pseudo characters, whereby these multimedia manipulating actions operate on the pseudo characters analogously to how the corresponding text manipulating actions operate on the textual characters and whereby the result of these multimedia manipulating actions on a particular pseudo character is effected on the stored multimedia content on the basis of the particular pseudo character's representation of a piece of multimedia content. In an embodiment, the multimedia mode includes an audio display mode and the multimedia content contains audio. The time on the actual stored audio corresponding to displayed pseudo characters. The time sequence of audio governs the progression of its display along successive lines. For easy accessibility the audio signal is represented as pseudo-characters such as tiny blocks with height according to audio intensity. In particular, space characters function as delimiters between contiguous audio segments that are separated by a pause. Such a pause can be detected as occurring in the audio input, such as the end of a word or sentence. In an alternative realization, any pause character is a default item in that selectively, audio may be input into selective positions, i.e. time instants, such as in filling in a form or questionary with audio answers. In this way, audio is indeed processed as a text metaphore. The correspondence among the various activations makes life easier for any experienced user. On the other hand, the mapping of various manipulating operations on various input devices need not be uniform among text and audio. Indeed for a single object, certain manipulations may be restricted to a particular input device as differing for other manipulations and/or another object.

Advantageously said audio is voice at a linewise display scale that is comparable to text display, and comprising delimiters as signalizations of detected silence instants. The duration of a word or line of text would then correspond in display space to the display of that many characters in textual representation. Their correspondence in physical space would be readily visible to a user. The silence delimiters correspond to ends of words or sentences in a written text.

Advantageously said display means has a fax display mode as based on linewise representation of said fax and in said fax mode featuring at least a second subset of the set of text manipulating actions operating on a displayed fax area in similar way as on displayed text. Fax is defined as a text represented by a bit map, wherein the character/word content or format may be uncertain in any degree, and wherein in principle, any two-dimensional format is allowable. It has been found that composing in a fax page would be advantageous as well, such as transmitting a text together with non-textual material, supplementing received fax with typewritten text, moving parts of a facsimile page with respect to other parts, and many others. The subsets of actions relating to audio and fax pages, respectively, may be, but need not be identical. The difference between text and fax information, is that the system does not know the meaning of the fax information. Even with a character recognition feature, only an approximate knowledge is present.

Advantageously, said system has skew correcting means for under user control correcting skew of a particular line of fax. Word select is possible if the skew is small over the word length, which usually is the case. Line select is possible if the skew over the line length is small compared to the line height. If this is not the case, the operator may manually correct the skew; in-processor algorithms that are rather elementary have been described in US Patents 4,618,991 and 4,759,076. No editing in the sense of the present invention has been given by these references, however.

Advantageously, said system has orientation detection means for detecting a local orientation of a displayed fax text line for allowing word and/or line select by said actions along a so detected line. Whereas the earlier approach works if the adjustment required is not too great (say, up to some 20°) and is more or less uniform over a page, there could occur problems if the skew is very large (up to 90°) and/or is severely non-uniform over a page, such as would occur in handwriting. In that case, the orientation of the line is detected, such as has been described in US Patent 4,723,297, which may, in principle, be done separately for each line. The detection may be followed by correction, if feasible, or the editing may be executed directly on the slanting uncorrected line.

Various advantageous aspects are recited in dependent Claims.

### BRIEF DESCRIPTION OF THE FIGURES

The invention will be further disclosed according to the appended Figures that successively show:
Figure 1 a general diagram of a computer system;
Figures 2-7 various display formats;

### DESCRIPTION OF A PREFERRED EMBODIMENT

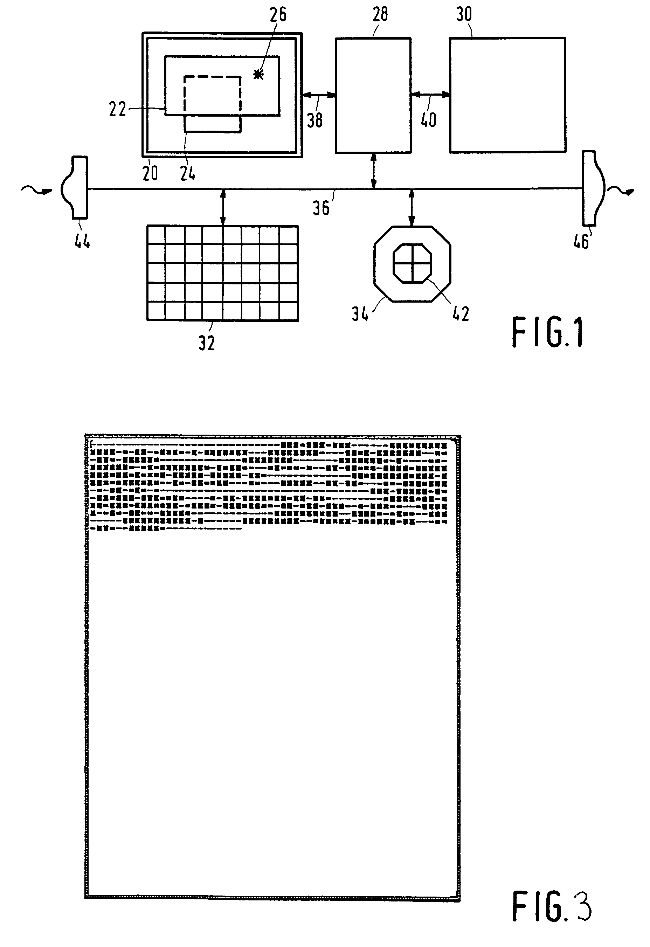

Figure 1 is a general diagram of a keyboard-oriented computer system. There is a page display 20. Shown are a foreground window 22, a partially covered window 24 and a cursor 26. The display may be based on a standard character set, or it may be high definition in that for each character an arbitrary bit map may be chosen. Processor 28 may execute text processing as well as system software. Memory 30 stores data to be displayed and other data. Keyboard 32 receives user actuations to be translated into system actions. Mouse 34 can be used to input absolute or differential positions in conjunction with clicking actions on any of four buttons 42. Block 44 represents a microphone with associated conversion mechanism to n-bit audio samples, that may be encoded, modulated, filtered, and, as the case may be, used in a voice recognition subsystem. The value of n of course, as well as the frequency of the samples, audio processing and other technology relevant to digital audio, relate to intended quality. Block 46 represents a loudspeaker that may output digital received audio samples via error correction, demodulation and digital-to-analog conversion to continuous audio. In addition to this, audio may remain analog if editably stored on a suitable medium. In principle, all audio editing may be done on an analog level, such as replacing, inserting, dubbing, fading and superposing, inasmuch as the invention proper relates to the interfacing with signalization of the audio. In the Figure, no analog storage has been provided and all operation is digital. Further communication lines 36, 38, 40 interconnect the subsystems shown. The configuration shown can be expanded or shrunk to any feasible degree, by means of:
- background memory
- external data communication
- adapted functionality of subsystems
- other I/O, such as graphics I/O (also called -mouse- hereinafter, such as soft keys, joystick)
- other storage, such as tape
- other communication pattern, instead of 36, 38, 40.

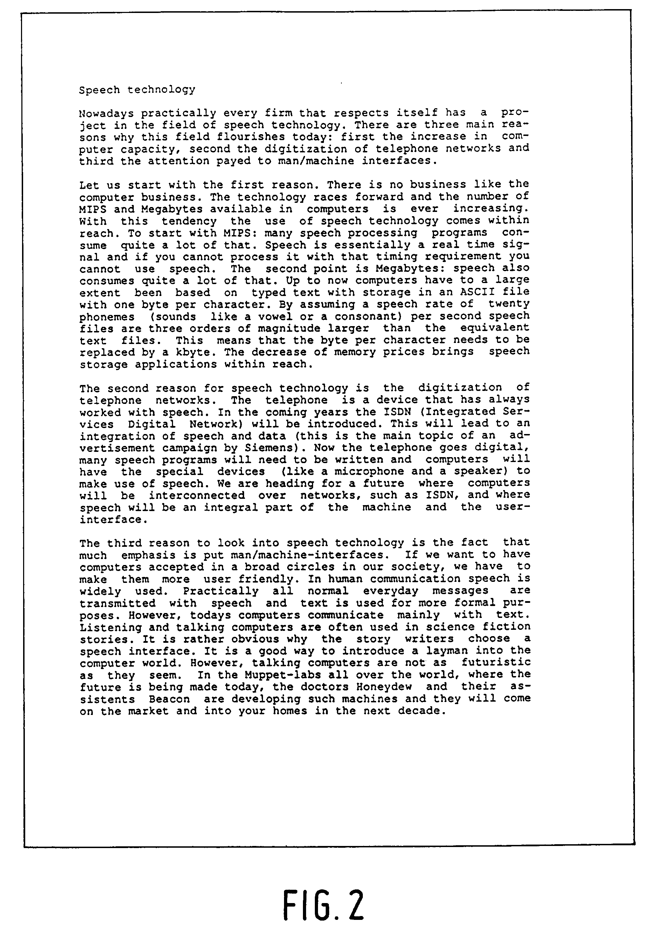

For brevity, Figure 1 does not show the conversion of audio to pseudo characters. According to various discrimination thresholds, for the average audio amplitude, the pseudo-characters in the present embodiment may have any of four non-zero heights as shown in Figures 2-7. Of course, other numbers are feasible. The translation of a particular digitized amplitude to a geometric representation is by converting amplitude to an address code for a character generator that generates a pseudo-character in the same way as standard characters. Other representations are feasible, such as dots of various diameters (the diameter now linked to amplitude), blocks with various greyness levels and/or colours, or other. The mapping of the audio on the pseudo-characters may be two-dimensional, such as by discriminating both audio level and audio pitch. This would, for example, elucidate a dialog between a male voice and a female voice. The mapping coordinates could now be both size and colour of the pseudo-characters.

Figures 2-7 show various display formats. Figure 2 is a text format, such as according to 53 rows of 65 characters each. In the example, characters are in print, with left-side and right-side registration, uniform periodicity and uniform line height The content of this page is irrelevant to the invention as well as to the disclosure thereof. Now, the format need not be uniform. It may be given by a shape description instead of by the shape itself, such as in the well-known Postscript® system.

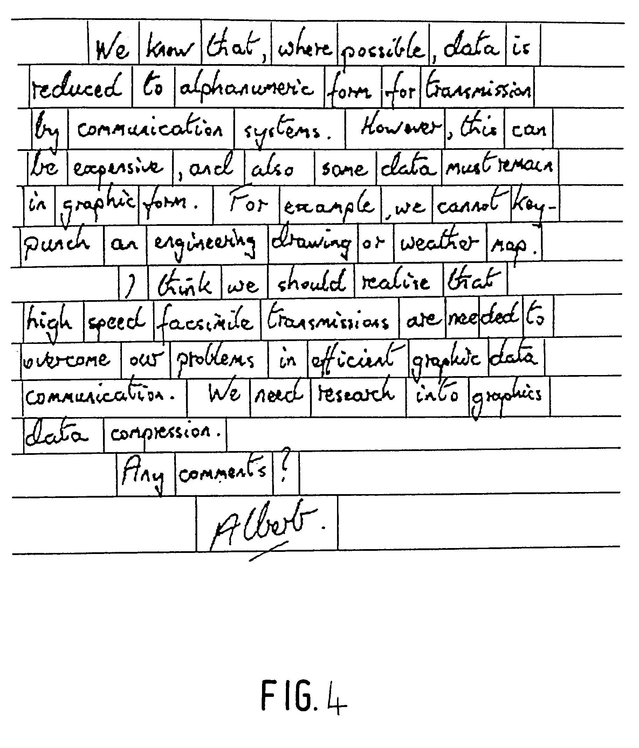

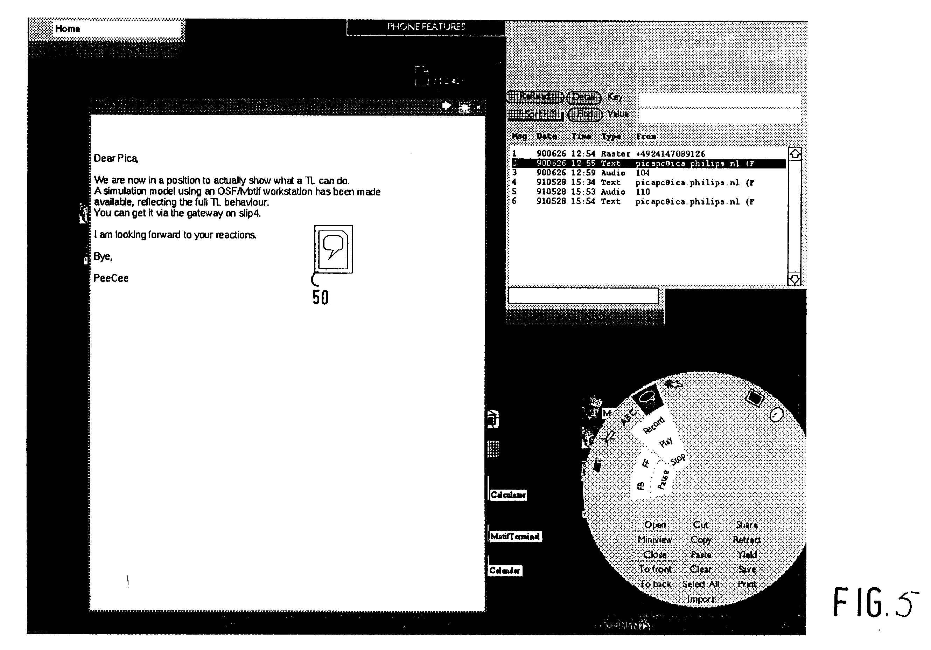

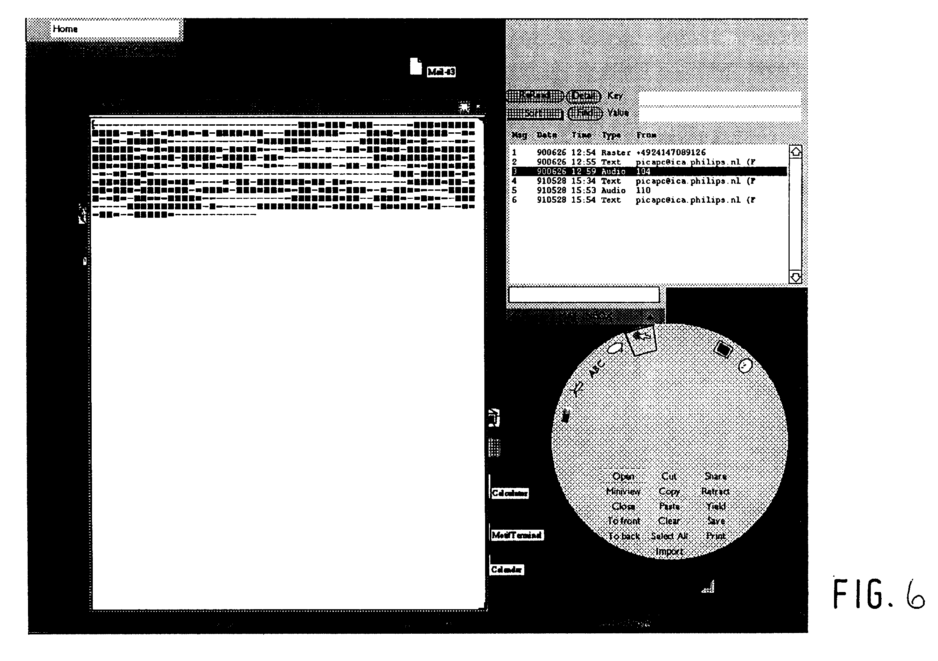

Figure 3 is a voice format. Each character represents a voice period of about 1/20 of a second. The height of a block corresponds to the amplitude or energy of the voice segment. The pseudo characters have about the same width as the characters of Figure 2. An interrupted line indicates the connected sequence. Other representations are possible. Colour could indicate raised pitch such as at the end of a questioning phrase. Also other voice characteristics may be indicated such as the respective speakers in a conversation that each have their own colour. Apart from the height other shapes of the pseudo characters would be feasible to indicate various natural or artificial characteristics. Examples are marks for end-of-sentence, echo, machine generated speech versus recorded speech. The representation can be used for voice, music, animal sound, machine sound, background noise from machines, natural noise, and other.

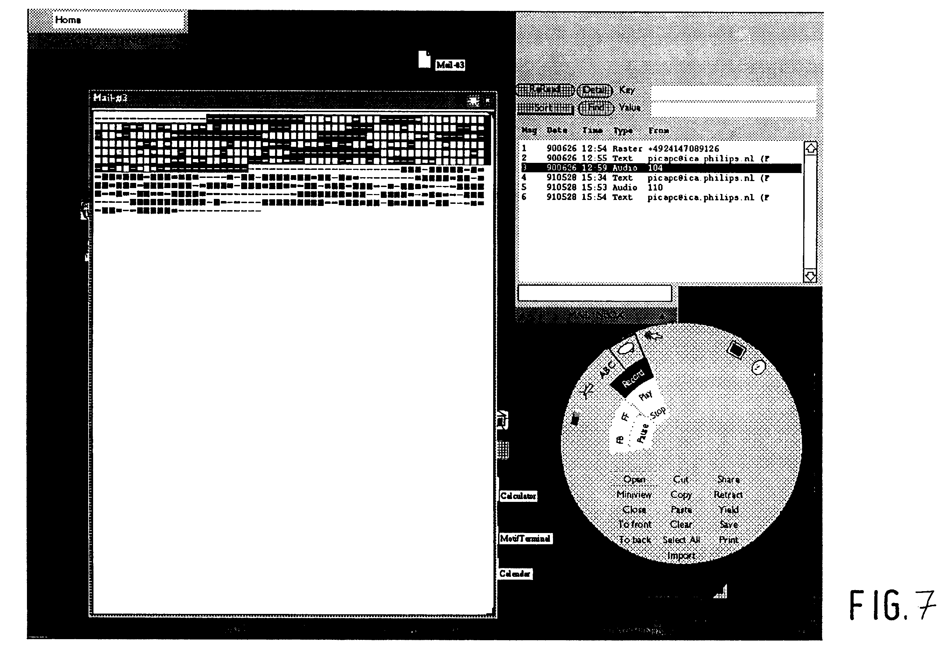

Figure 4 is a fax format that is organized according to standard horizontal lines and provided with word rasters. The fax may be represented as it is received or produced. Alternatively, it may be represented as a string of blocks of varying lengths. Such block that may itself be considered as a pseudo-character, may be detected by a known segmentation algoritm. These pseudo-characters may be represented in similar way as has been explained with respect to audio herebefore. The content of the fax message itself is irrelevant to the present invention as well as to the disclosure thereof. The advantage of using such pseudo characters is, for example that the content of the fax may remain unknown to an operator (who only selects particular parts, or executes other text processing for which the content of the text need not be known). Another example is that such representation discretely shows the empty spaces even if the full text could give rise to ambiguities. The raster shown may be omitted if advantageous. The representation may be a combination of the fax text itself in combination with the block structure. It may be feasible to alternate between the two representations. The case of slanted lines has been discussed earlier. The fax may comprise a combination of text or texts (at respective slanting angles) and non-textual material such as Figures.

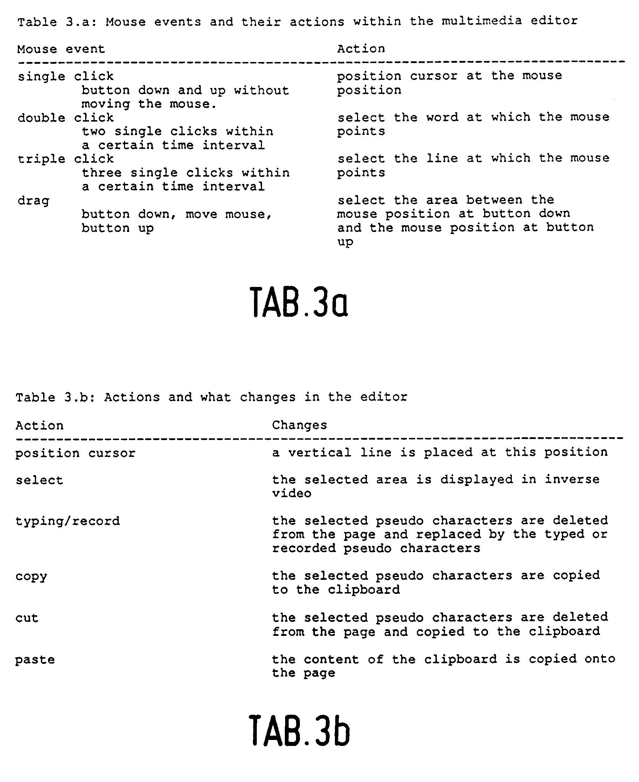

Figure 5 shows at left a text page with a so-called audio sticker on it, representing a non-open voice sheet in iconized state. In this state, it is possible to play the stored voice relating to this sheet and also to record new voice (or other audio), which is thereupon joined to this sheet. The activating of this functionality is effected by accessing of icon 50 that shows a stylized quote mark. However, only an open sheet leads to full editing functionality. The right hand side of the display shows various items and windows that are irrelevant to the present invention and are mousewise accessible.

Figure 6 shows an opened voice sheet, cf. the downstepping of the dark strip at right-hand side through the select column, with respect to Figure 5. This open sheet allows full-featured editing. Instead of a text font there is a block font indicating the amplitudes. There is a cursor in the left upper corner in the same way as a text cursor. New input (by recording) is inserted at its positions. Just as with text the user can select some part and use the cut, copy and paste operations. This makes it an audio editor, being much more than a cassette recorder. The cursor can be placed at a special position by a mouse click. But the user can also make use of the feature, that the cursor moves during play. Pressing "stop" will leave the cursor at the current position.

If there is some part selected, the command is restricted to that selection. E.g. the user first wants to listen to a selection before deciding to cut it. Figure 7, by inverted video shows selection of a segment that has about 6½ lines of pseudo characters.

Tables 3a and 3b show tables of various actions. Table 3a shows the actions and extent of selection. In the left column it is shown that selecting may be done by a particular clicking operation. Clicking a particular mouse button starts a brief delay, for example 500 milliseconds. If within this delay a further clicking occurs, the number of clicks is accumulated. If no clicking occurs within this delay, a subsequent clicking resets the accumulated sum (to one). The maximum accumulation is three in this example. The right column shows the effect. Single click selects the actual cursor position. Double click selects the word or pseudo word of the actual cursor position, that is, to left and to right the first space character act as delimiters to the selection. Triple click likewise selects the whole line of characters or pseudo characters. The last line shows the effect of dragging. Dragging is the same as clicking but holding the clicking button while moving the mouse (or rather, its on-screen representation) to an intended destination position. If the button is accidentally deactivated somewhere, that is the destination position. Dragging selects all (pseudo) characters between the start position and the destination position: this means all characters along the line of the start position to the right of the start position and all characters on the fine of the destination position to the left of the destination position, and all intermediate lines completely. If the two positions are on one single line, only the interval on that line is selected. In principle, dragging could be combined with plural clicking, but this has not been considered.

Now, Table 3b shows what happens with the amount of (pseudo) characters after selection according to the pattern of Table 3a. The set of commands in the left hand column may be activated by a particular dedicated key or button on the keyboard, by a software defined key on the keyboard, or by a soft key on a displayed soft keyboard. The set of commands is as follows:
a. type/record: the characters in the selected region are deleted from the page and the newly typed or recorded characters are inserted in the actual cursor position whil continuously keeping actual text closed-up.
b. command CUT: this deletes all (pseudo) characters selected, closes up the (pseudo) text, and puts the selected information on the so-called CLIPBOARD, which is a particular dedicated memory area that is always directly accessible from the keyboard. If a plurality of windows have been activated in succession, the information present in the clipboard always remains linked to the window that did originate such information. The clipboard itself does not provide cross-window transportability. If such transportability were required, a special additional command is required to directly associate the deleted characters with the destination window that must then be operated directly. If a succession of CUT commands is given in succession, the information deleted is stacked and can be recalled in a last-In-first-out sequence. In another realization a first-in-first-out organization might be preferable, however.
c. command COPY: this, likewise, puts the selected information on the clipboard, but without deleting the selected information at its original location.
d. command PASTE: if applicable, delete the selected information (if more than one pseudo character is selected) and insert the clipboard information on the position(s) so selected. If the latter information is too large, insertion will let the amount of information grow. On the other hand, the information amount will shrink if the new information is less than the original information.
c. command DELETE: the selected information is deleted, and the subsequent information closes up.

Of course, the information may be manipulated in various other ways than according to the above subset of activations, but nevertheless in combination therewith. For example, fax information may be underlined. For another, audio information may be dubbed, loudness-clipped or other. This could be done, either in the context where the pseudo-characters of the associated communication medium occur, or in a completely separate setting.

In conclusion, the uniform interface for various communication media produces an easier accessibility. For brevity, the software has not been extensively disclosed, as this was considered to closely parallel that for text only, which is standard in various packages that are available commercially.

## Claims

1. A text processing system for processing a document having a textual content and a multimedia content, the system comprising pagewise text display means
- for in a textual mode displaying textual characters, supported by text processing means and text storage means and having a user interface featuring a set of text manipulating actions which can be activated through mechanical user actuation of an appropriate input means and which then operate on the displayed textual characters, and
- for in a multimedia mode displaying the multimedia content, supported by multimedia processing means and multimedia storage means and having a user interface featuring multimedia manipulating actions which can be activated through mechanical user actuation of an appropriate input means and which then operate on the multimedia content,
characterised in
that said display means in the multimedia mode is arranged for displaying the multimedia content as a series of pseudo characters in a line-wise fashion, the series of pseudo characters representing a temporal organisation of respective pieces of stored multimedia content, and that the multimedia manipulating actions include a first multimedia subset corresponding to a first textual subset of the set of text manipulating actions for operating on the displayed pseudo characters, whereby these multimedia manipulating actions operate on the pseudo characters analogously to how the corresponding text manipulating actions operate on the textual characters and whereby the result of these multimedia manipulating actions on a particular pseudo character is effected on the stored multimedia content on the basis of the particular pseudo character's representation of a piece of multimedia content.

2. A text processing system as claimed in Claim 1, wherein said multimedia mode includes an audio display mode for displaying the pseudo characters representing respective pieces of stored audio and wherein the multimedia manipulating actions include a second multimedia subset corresponding to a second subset of the set of text manipulating actions for operating on the displayed pseudo characters.

3. A text processing system as claimed in Claim 2, wherein said audio is voice at a line-wise display scale that is comparable to text display and comprising delimiters as signalizations of detected silence instants.

4. A text processing system as claimed in Claim 2 or 3, wherein said multimedia mode includes a fax display mode for displaying the pseudo characters representing respective pieces of a stored fax and wherein the multimedia manipulating actions include a third multimedia subset corresponding to a third subset of the set of text manipulating actions for operating on the displayed pseudo characters.

5. A text processing system as claimed in Claim 1, wherein said multimedia mode includes a fax display mode for displaying the pseudo characters representing respective pieces of a stored fax and wherein the multimedia manipulating actions include a fourth multimedia subset corresponding to a fourth subset of the set of text manipulating actions for operating on the displayed pseudo characters.

6. A text processing system as claimed in Claim 4 or 5 having skew correcting means for under user control correcting skew of a particular line of fax.

7. A text processing system as claimed in Claim 4 or 5 having orientation detection means for detecting a local orientation of a displayed fax text line for allowing word and/or line select by said actions along a so detected line.

8. A text processing system as claimed in any of the Claims 4 to 7, wherein said fax is line-wise represented as further pseudo characters.

9. A text processing system as claimed in Claim 4, wherein said second and third subsets are identical.

10. A text processing system as claimed in any of the Claims 1 to 9, wherein said pseudo characters have two variable attributes assigned thereto, such as size and colour.

## Patentansprüche

1. Textverarbeitungssystem zur Verarbeitung eines Dokumentes mit einem textlichen Inhalt und einem Multimedia-Inhalt, wobei das System Anzeigemittel zur seitenweisen Textanzeige
- für die Darstellung von textlichen Zeichen in einem textlichen Modus umfasst, unterstützt durch Textverarbeitungsmittel und Textspeichermittel und mit einer Benutzeroberfläche mit einer Reihe von Textmanipulationsaktionen, die durch mechanische Betätigung eines geeigneten Eingabemittels durch den Benutzer aktiviert werden können und die dann auf die angezeigten textlichen Zeichen wirken, und
- für die Anzeige des Multimedia-Inhalts in einem Multimedia-Modus, unterstützt durch Multimedia-Verarbeitungsmittel und Multimedia-Speichermittel und mit einer Benutzeroberfläche mit Multimedia-Manipulationsaktionen, die durch mechanische Betätigung eines geeigneten Eingabemittels durch den Benutzer aktiviert werden können und die dann auf den Multimedia-Einhalt wirken,
dadurch gekennzeichnet,
dass das genannte Anzeigemittel im Multimedia-Modus vorgesehen ist, um den Multimedia-Inhalt als eine Reihe von Pseudo-Zeichen zeilenweise anzuzeigen, wobei die Reihe von Pseudo-Zeichen eine zeitliche Organisation der betreffenden Teile des gespeicherten Multimedia-Inhalts darstellen, und dadurch, dass die Multimedia-Manipulationsaktionen eine erste Multimedia-Untergruppe, die einer ersten textlichen Untergruppe der Gruppe von Text-Manipulationsaktionen entspricht, für die Anwendung auf die angezeigten Pseudo-Zeichen umfassen, wobei diese Multimedia-Manipulationsaktionen in einer Weise auf die Pseudo-Zeichen wirken, die analog zu der Wirkungsweise der entsprechenden Text-Manipulationsaktionen auf die textlichen Zeichen ist und wobei das Ergebnis dieser Multimedia-Manipulationsaktionen für ein bestimmtes Pseudo-Zeichen sich auf den gespeicherten Multimedia-Inhalt auf der Basis der Darstellung des bestimmten Pseudo-Zeichens von einem Teil des Multimedia-Inhalts auswirkt.

2. Textverarbeitungssystem nach Anspruch 1, wobei der genannte Multimedia-Modus einen Audio-Anzeigemodus umfasst, um die Pseudo-Zeichen, die die jeweiligen Teile von gespeicherten Audio-Informationen darstellen, anzuzeigen, und wobei die Multimedia-Manipulationsaktionen eine zweite Multimedia-Untergruppe, die einer zweiten Untergruppe der Gruppe von Text-Manipulationsaktionen entspricht, für die Bearbeitung der angezeigten Pseudo-Zeichen umfassen.

3. Textverarbeitungssystem nach Anspruch 2, wobei die genannte Audio-Information eine Stimme auf einer zeilenweisen Anzeigeskala, die mit der Textanzeige vergleichbar ist und Trennzeichen als Signalisierung von erkannten Stummpassagen umfasst.

4. Textverarbeitungssystem nach Anspruch 2 oder 3, wobei der genannte Multimedia-Modus einen Fax-Anzeigemodus umfasst, um die Pseudo-Zeichen, die die jeweiligen Teile eines gespeicherten Faxschreibens darstellen, anzuzeigen, und wobei die Multimedia-Manipulationsaktionen eine dritte Multimedia-Untergruppe, die einer dritten Untergruppe der Gruppe von Text-Manipulationsaktionen entspricht, für die Bearbeitung von angezeigten Pseudo-Zeichen umfassen.

5. Textverarbeitungssystem nach Anspruch 1, wobei der genannte Multimedia-Modus einen Fax-Anzeigemodus umfasst, um die Pseudo-Zeichen, die die jeweiligen Teile eines gespeicherten Faxschreibens darstellen, anzuzeigen, und wobei die Multimedia-Manipulationsaktionen eine vierte Multimedia-Untergruppe, die einer vierten Untergruppe der Gruppe von Text-Manipulationsaktionen entspricht, für die Bearbeitung von angezeigten Pseudo-Zeichen umfassen.

6. Textverarbeitungssystem nach Anspruch 4 oder 5 mit Schrägekorrekturmittel, um unter Benutzersteuerung die Schräge einer bestimmten Faxzeile zu korrigieren.

7. Textverarbeitungssystem nach Anspruch 4 oder 5 mit Orientierungserkennungsmittel zum Erkennen einer lokalen Orientierung einer angezeigten Faxtextzeile, damit eine Wort- und/oder Zeilenauswahl durch die genannten Aktionen auf einer dergestalt erkannten Zeile möglich wird.

8. Textverarbeitungssystem nach einem der Ansprüche 4 bis 7, wobei das genannte Fax zeilenweise in Form weiterer Pseudo-Zeichen dargestellt ist.

9. Textverarbeitungssystem nach Anspruch 4, wobei die genannte zweite und die genannte dritte Untergruppe identisch sind.

10. Textverarbeitungssystem nach einem der Ansprüche 1 bis 9, wobei den genannten Pseudo-Zeichen zwei variable Attribute zugeordnet sind, zum Beispiel Größe und Farbe.

## Revendications

1. Système de traitement de texte pour le traitement d'un document comportant un contenu textuel et un contenu multimédia, le système comprenant un moyen d'affichage de texte par page :
- pour l'affichage de caractères textuels en mode textuel, géré par un moyen de traitement de texte et un moyen de stockage de texte et comportant une interface utilisateur proposant un jeu d'actions de manipulation de texte qui peuvent être activées par action mécanique de l'utilisateur sur un moyen d'entrée approprié et traitent ensuite les caractères textuels affichés, et
- pour l'affichage du contenu multimédia en mode multimédia, géré par un moyen de traitement de données multimédia et de stockage de données multimédia et comportant une interface utilisateur proposant des actions de manipulation de données multimédia qui peuvent être activées par action mécanique de l'utilisateur sur un moyen d'entrée approprié et traitent ensuite le contenu multimédia,
caractérisé en ce que
ledit moyen d' affichage en mode multimédia est agencé de manière à afficher le contenu multimédia par ligne sous la forme d'une série de pseudo-caractères, la série de pseudocaractères représentant une organisation temporelle de parties respectives du contenu multimédia stocké, et en ce que les actions de manipulation des données multimédia comprennent un premier sous-ensemble multimédia correspondant à un premier sous-ensemble textuel de l'ensemble d'actions de manipulation de texte pour traiter les pseudo-caractères affichés, de manière que les actions de manipulation des données multimédia agissent sur les pseudo-caractères de la même manière que les actions de manipulation de texte agissent sur les caractères textuels et de manière que le résultat de ces actions de manipulation des données multimédia sur un pseudo-caractère particulier agisse sur le contenu multimédia stocké sur base de la représentation d'une partie du contenu multimédia du pseudo-caractère particulière.

2. Système de traitement de texte selon la revendication 1, dans lequel ledit mode multimédia comprend un mode d'affichage audio pour afficher les pseudocaractères représentant des parties respectives de données audio stockées et dans lequel les actions de manipulation des données multimédia comprennent un deuxième sous-ensemble multimédia correspondant à un deuxième sous-ensemble de l'ensemble d'actions de manipulation de texte pour agir sur les pseudo-caractères affichés.

3. Système de traitement de texte selon la revendication 2, dans lequel lesdites données audio sont une voix à une échelle d'affichage par ligne comparable à un affichage de texte et comprenant des éléments de délimitation sous la forme de signalisations d'instants de silence détectés.

4. Système de traitement de texte selon la revendication 2 ou 3, dans lequel ledit mode multimédia comprend un mode d'affichage en télécopie pour afficher les pseudo-caractères représentant des parties respectives d'une télécopie stockée et dans lequel les actions de manipulation des données multimédia comprennent un troisième sous-ensemble multimédia correspondant à un troisième sous-ensemble de l'ensemble d'actions de manipulation de texte pour agir sur les pseudo-caractères affichés.

5. Système de traitement de texte selon la revendication 1, dans lequel ledit mode multimédia comprend un mode d'affichage en télécopie pour afficher les pseudo-caractères représentant des parties respectives d'une télécopie stockée et dans lequel les actions de manipulation des données multimédia comprennent un quatrième sous-ensemble multimédia correspondant à un quatrième sous-ensemble de l'ensemble d'actions de manipulation de texte pour agir sur les pseudo-caractères affichés.

6. Système de traitement de texte selon la revendication 4 ou 5, ayant un moyen de correction de désalignement pour permettre, sous le contrôle de l' utilisateur, la correction du désalignement d'une ligne donnée d'une télécopie.

7. Système de traitement de texte selon la revendication 4 ou 5, ayant un moyen de détection d'orientation pour détecter une orientation locale d'une ligne de texte de télécopie affichée pour permettre la sélection d'un mot et/ou d'une ligne par lesdites actions le long d'une ligne ainsi détectée.

8. Système de traitement de texte selon l'une quelconque des revendications 4 à 7, dans lequel ladite télécopie est représentée par ligne sous la forme d'autres pseudo-caractères.

9. Système de traitement de texte selon la revendication 4, dans lequel lesdits deuxième et troisième sous-ensembles sont identiques.

10. Système de traitement de texte selon l'une quelconque des revendications 1 à 9, dans lequel deux attributs variables, tels que la taille et la couleur, sont attribués auxdits pseudo-caractères.
